Europäisches Patentamt

European Patent Office

Office européen des brevets

(19)

(11) Veröffentlichungsnummer : **0 392 520 B1**

(12) # EUROPÄISCHE PATENTSCHRIFT

(45) Veröffentlichungstag der Patentschrift :
**28.10.92 Patentblatt 92/44**

(51) Int. Cl.$^5$ : **F02C 7/042, F02K 7/16**

(21) Anmeldenummer : **90106974.0**

(22) Anmeldetag : **11.04.90**

(54) **Turbinen-Staustrahltriebwerk.**

(30) Priorität : **14.04.89 DE 3912392**

(43) Veröffentlichungstag der Anmeldung :
**17.10.90 Patentblatt 90/42**

(45) Bekanntmachung des Hinweises auf die
Patenterteilung :
**28.10.92 Patentblatt 92/44**

(84) Benannte Vertragsstaaten :
**BE CH DE FR GB IT LI**

(56) Entgegenhaltungen :
**DE-B- 1 140 779**
**DE-C- 3 741 732**
**FR-A- 2 370 865**
**GB-A- 2 205 360**
**US-A- 2 970 431**

(73) Patentinhaber : **MTU MOTOREN- UND
TURBINEN-UNION MÜNCHEN GMBH
Dachauer Strasse 665 Postfach 50 06 40
W-8000 München 50 (DE)**

(72) Erfinder : **Wildner, Walter
Lierstrasse 29
W-8000 München 19 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung bezieht sich auf ein Turbinen-Staustrahltriebwerk nach dem Oberbegriff des Patentanspruchs 1.

In jüngster Zeit gewinnen kombinierte Turbinen-Staustrahltriebwerke wieder an Bedeutung, und zwar im Rahmen sogenannter HYPERschallflugkonzepte mit äußerst hohem Einsatzspektrum vom Start bis zur hohen Überschallgeschwindigkeit in großen Flughöhen (bis etwa 30km Höhe). Die Hyperschallflugkonzepte schließen dabei unter anderem ein Weltraum-Fluggeräte-Konzept ein (Projekt Sänger), welches auf ein Zwei-Stufen-Konzept, wie folgt, hinausläuft. Die erste Stufe soll von einem nur innerhalb der Atmosphäre operierenden Fluggerät durchgeführt werden, während die zweite Stufe auf einem "huckepackartig" vom genannten Fluggerät mitgenommenen Nutzlastfluggerät basiert, daß zwecks Weltraummissionen im oberen Bereich der Atmosphäre im Wege eines geeigneten Raketenantriebssystems die ihm zugewiesene Flugbahn eigenständig fortsetzen soll. Das für die erste Stufe zuständige Fluggerät ist demnach also rückkehrbar und wiederverwendbar und vollzieht Starts und Landungen wie ein herkömmliches Flugzeug.

Bei z.B. für ein derartiges Fluggerät einzusetzenden kombinierten Turbinen-Staustrahl-Triebwerken soll im allgemeinen etwa bei Erreichung einer Fluggeschwindigkeit von etwa Mach 3 das Turbinenstrahltriebwerk kontinuierlich ab- und der betreffende Staustrahlantrieb kontinuerlich eingeschaltet werden, um allein mit letzterem gewünschte hohe Überschall- bzw. Hyperschallgeschwindigkeiten bis zu Mach 4,5 oder gar darüber zu erreichen. Fluggeschwindigkeiten von etwa Mach 2 oder gar darüber können dabei im kombinierten Betrieb "Turbinenstrahltriebwerk mit eingeschaltetem Nachbrenner" erreicht werden; der hierfür vorteilhaft dem Turbinenstrahltriebwerksteil bzw. dem Turbo-Basistriebwerk nachgeschaltete und gegebenenfalls in der Kombination aus Verdichterluftanteilen und Triebwerksabgas beaufschlagte Nachbrenner kann durch Zuschaltung weiterer Brennstoffeinspritzmittel nebst Flammstabilisatoren das Antriebssystem für den Staustrahlbetrieb ausbilden unter entsprechend bemessener ausschließlicher Staudruckversorgung bei abgeschaltetem Turbinenstrahltriebwerkteil.

Dabei kann die Staudruckluftversorgung einer dem Turbobasistriebwerk nachgeschalteten, gemeinsamen Nach-/Staustrahlbrennkammer über einen parallel bzw. in koaxialer Ummantelung zum Basistriebwerk geführten Staudruckluftkanal erfolgen, der, unter gleichzeitig kontinuierlicher Freigabe der erforderlichen Luftströmung in das Basistriebwerk, abzusperren wäre - oder umgekehrt. Aus Funktionsgründen muß dabei ferner bei ausschließlichem Staustrahlbetrieb eine betriebssichere, temperaturbeständige Absperrung des Basistriebwerks gegenüber dem Staudruckluftkanal gewährleistet sein, insbesondere gegenüber den darin herrschenden vergleichsweise hohen Temperaturen von etwa bis zu 1700°C oder gar darüber. Diese Absperrung betrifft sowohl die Luftansaugseite wie aber auch die Abgasaustrittsseite des Turbobasistriebwerks gegenüber der örtlich dahinter zusammenfließenden Staudruckluftströmung zur Nach-/und Zusatzverbrennungseinrichtung.

Ein Turbinen-Staustrahltriebwenk dieser Art ist aus GB-A-2205360 bekannt.

Bezüglich zu wählender Absperreinrichtungen ist es bei einem derartigen kombinierten Triebwerkskonzept besonders wichtig, daß kontinuierliche, "stoßfreie" Umschaltlastphasen von der einen Betriebsart (Gasturbinentriebwerksbetrieb/Staustrahlbetrieb bzw. Staustrahlbetrieb/Gasturbinentriebwerksbetrieb) gewährleistet werden; und zwar dies, ohne hierdurch umfangsmäßig räumlich weit ausladene Triebwerksabmessungen, u.a. auch hinsichtlich eines erhöhten Stirnflächenwiderstands, hervorrufen zu müssen. Zur Verhinderung eines unzulässig starken Schubabfalles in den kritischen Umschaltphasen soll also jeweils für das Staustrahlantriebssystem bzw. das Turbobasistriebwerk noch eine für das jeweilige kontinuierliche Abschalten hinreichend bemessene Staudruck- bzw. Ansaugluftzufuhr zur Verfügung stehen.

Bezüglich der bei einem derartigen Triebwerkskonzept zu wählenden Absperreinrichtungen ist ferner eine störungsunanfällige Bauweise mit verhältnismäßig wenig bewegten Bauteilen nebst zugehörigen Verstellmitteln wichtig; u.a. soll dadurch auch eine Bauteilbruchgefahr möglichst gering veranschlagt werden, um also möglichst zu verhindern, daß Bruchteile vom Verdichter des Basistriebwerks angesaugt werden und so erhebliche Triebwerksschäden verursachen könnten.

Der Erfindung liegt die Aufgabe zugrunde, ein kombiniertes Gasturbinen-Staustrahltriebwerk anzugeben, mit dem die unterschiedlichen Betriebsarten (Staustrahlbetrieb/Turbotriebwerksbetrieb), insbesondere in den kritischen Umschalphasen von der einen auf die andere Betriebsart, ohne unzulässigen Schubabfall sicher beherrschbar sind; dabei soll insbesondere luftansaugseitig eine betriebssichere Absperrung des Turbobasistriebwerks gegenüber der dabei freigelegten Staudruckluftzufuhr erreicht werden.

Die gestellte Aufgabe ist mit den Merkmalen des Kennzeichnungsteils des Patentanspruchs 1 erfindungsgemäß gelöst.

In Anwendung eines ringförmigen Staudruckluftkanals, der eine verhältnismäßig geringe Durchmesseraufweitung des Gesamtriebwerks bedingt, können die unterschiedlichen Betriebsarten einwandfrei beherrscht werden, ohne dabei eine nennenswerte, mit Leistungseinbußen verknüpfte Stirnflächenaufweitung des Gesamttriebwerks in Kauf nehmen zu müssen.

Dabei gelingt es u.a. ferner, bei stillgesetztem Staustrahltriebwerk bzw. Antriebssystem und alleinigem Gasturbinentriebwerksbetrieb eine aerodynamisch einwandfreie Luftansauggeometrie für den Verdichter bereitzustellen.

Gemäß der Erfindung ist es besonders vorteilhaft, daß insbesondere die luftansaugseitig angeordneten Absperrmittel (tropfenförmiger Zentralkörper/Ringschieber) als die kritischen Umschaltphasen kontinuierlich in gegenläufigen Bewegungsphasen steuernd auszubilden, ohne einen Schubabfall hervorzurufen. Ein wesentlicher Beitrag zur Lösung dieses Problems ist die angegebene örtliche Erweiterung des die Staudruckluft führenden Ringmantels (Staustrahlrohrs) in Form einer mehreckig auslaufenden Kontur derart, daß in einer beim Umschaltvorgang hervorgerufenen gegenseitigen Überfahrungs- und Absperrphase beider Schiebermittel der Ringschieber stets soweit in die räumliche Erweiterung verfahren ist, daß in dieser Phase - zwischen Ringschieber und örtlichen Zonen der Erweiterung des Außenmantels genügend groß bemessener Luftanteile in den Staudruckluftkanal bzw. in das Turbobasistriebwerk abströmen können. Vorteilhafte Ausgestaltungen der Erfindung ergeben sich aus den Patentansprüchen 2-12.

Anhand der Zeichnungen ist die Erfindung beispielsweise weiter erläutert; es zeigen:

Fig. 1 einen Schnitt gemäß A-A der Fig.2 eines kombinierten Gasturbinen- Staustrahltriebwerks nebst Absperr- und Steuermitteln zur Beherrschung der beiden unterschiedlichen Betriebsweisen dieses Triebwerks,

Fig. 2 eine Frontalansicht gemäß Blickrichtung X des Triebwerks nach Fig.1 und

Fig. 3 eine schematische Perspektivansicht der äußeren zylindrischen Triebwerksummantelung (Staustrahlrohr) nebst hier viereckig, insbesondere quadratisch auslaufender Erweiterung.

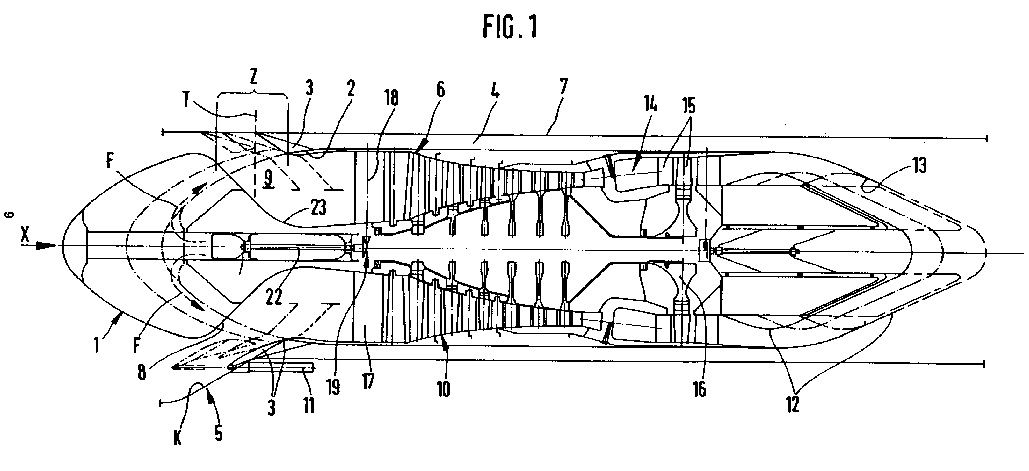

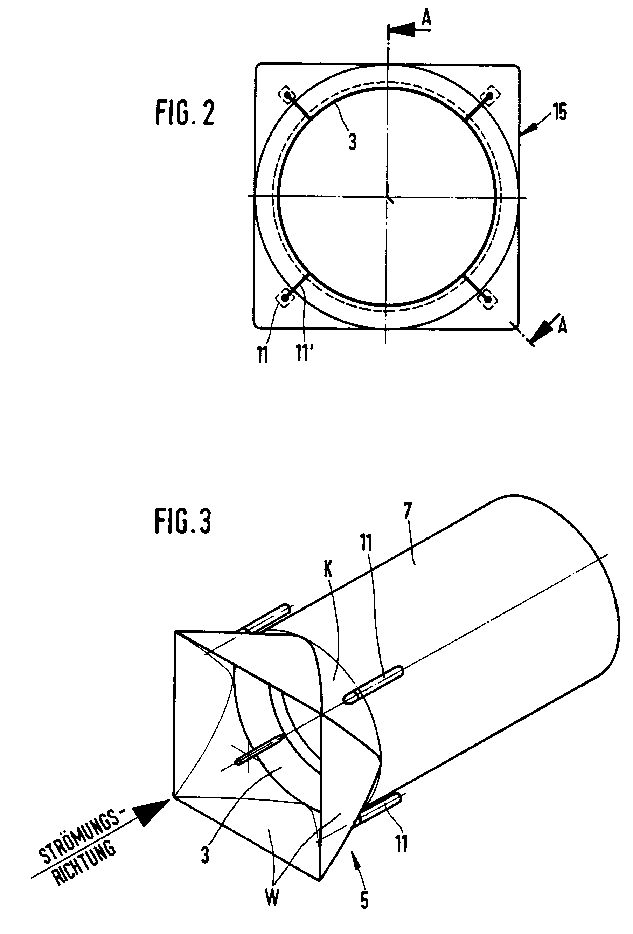

Fig. 1 veranschaulicht ein kombiniertes Gasturbinen-Staustrahltriebwerk mit einem das betreffende Turbobasistriebwerk (u.a. den Hochdruckverdichter 10 einschließend) ummantelnden Staudruckluftkanal 4; der Staudruckluftkanal 4 soll bei abgeschaltetem Staustrahlbetrieb unter gleichzeitiger Freigabe von Ansaugluft über eine Zuströmfläche Z in das betreffende Basistriebwerk gegenüber der Zufuhr von Staudruckluft absperrbar sein. Gemäß dem Grundgedanken der Erfindung soll die ansaugseitige Luftzuströmfläche Z des Turbobasistriebwerks durch Axialverstellung eines tropfenförmigen Körpers 1 gegenüber einem örtlichen Strömungsteiler 2 freilegbar oder absperrbar sein. Der genannte Strömungsteiler 2 bildet frontal eine Eintrittslippe für das Turbobasistriebwerk aus und ist im übrigen als stromaufwärtige Fortsetzung der inneren Ummantelung 6 des Turbobasistriebwerks zu verstehen. Der Staudruckluftkanal wird also zwischen einer äußeren ringförmigen Kanalummantelung 7 und der zuvor genannten inneren Ummantelung 6 des Turbobasistriebwerks ausgebildet. Gemäß dem Grundgedanken der Erfindung soll ferner ein dem tropfenförmigen Körper 1 stets entgegengerichtet axial verstellbarer Ringschieber 3 vorgesehen sein, der den Staudruckluftkanal 4 bei freigegebener Zuströmfläche Z des Turbobasistriebwerks absperrt und bei abgesperrter Zuströmfläche Z freigibt. Für die Funktion der Erfindung ist es besonders wichtig, daß der Staudruckluftkanal 4 in Höhe einer durch örtliche Gegenflächenüberfahrung des tropfenförmigen Körpers 1 und des Ringschiebers 3 hervorgerufenen Absperrzone T in stromaufwärtigen Richtung mehreckig erweitert ist. Es handelt sich dabei also gemäß Fig. 3 mit Fig. 1 um die dortige mit 5 bezeichnete Erweiterung, die gemäß Fig. 3 beispielsweise aus örtlich über dem Umfang verteilten geraden Flächenabschnitten G bzw. kegelförmigen Flächenabschnitten K besteht. Gemäß Fig. 2 und 3 wird damit also ein in stromaufwärtiger Richtung viereckig bzw. quadratisch auslaufender Erweiterungsteil der äußeren zylindrischen Kanalummantelung 7 (Staustrahlrohr) ausgebildet.

Wie aus Fig. 1 ferner ersichtlich ist, bildet der Ringschieber 3 einen in stromaufwärtiger Richtung kegelförmig erweitert profilierten Ring aus, der in der Absperrstellung - zwischen dem Strömungsteiler 2 und angrenzenden Gegenflächen der Ummantelung 7 und deren Erweiterung 5 - einen abgeschrägten Führungsabschnitt für die Ansaugluft bei freigegebener Zuströmfläche Z ausbildet.

Wie zuvor zu Fig. 3 speziell schon angedeutet, soll die Erweiterung 5 örtlich über den Umfang verteilte Kegelflächen K aufweisen, wonach also die Erweiterung teilweise kegelflächenartig ausgebildet ist und dabei auf die betreffende kegelige Form des Ringschiebers 3 abgestimmt gestaltet ist.

Wie hierzu aus Fig. 1, unten, ersichtlich ist, sitzt der Ringschieber in der Absperrstellung des Staudruckluftkanals 4 rückwärtig auf den betreffenden Kegelflächen K abdichtend auf.

Der notwendige Zuströmquerschnitt für die Ansaugluft in das Basistriebwerk kann zwischen einem äußeren Umfangswandabschnitt des tropfenförmigen Körpers 1 und einer Lippenstirnkante des Strömungsteilers 2 einerseits und betreffenden örtlichen Wandteilen der äußeren Kanalummantelung 7 ausgebildet werden. Es wird also bei freigelegter ringförmiger Zuströmfläche Z und abgesperrtem Staudruckluftkanal 4 ein ringförmiger Luftansaugkanal 9 des Verdichters 10 des Basistriebwerkes zwischen einer konvergenten Umfangswandsektion 8 des tropfenförmigen Körpers 1 und einer abgeschrägten Führungssektion des Ringschiebers 3 nebst örtlichen Sektionen des Strömungsteils 2 ausgebildet.

Der zuvor schon behandelte tropfenförmige Körper 1 kann im übrigen auch als ein koaxial zur Triebwerksachse rotationssymmetrisch angeordneter, in Richtung der Luftströmung divergent/konvergenter Zentralkörper umschrieben werden.

Wie ferner aus Fig. 1 ersichtlich ist, soll bei abgeschaltetem Turbobasistriebwerk und alleinigem Staustrahlbetrieb der gesamte Zuströmquerschnitt für Staudruckluft in den Staudruckluftkanal 4, bei vollständig axial ausgefahrenem Ringschieber 3, ringflächenartig ausgebildet sein; und zwar ringflächenartig zwischen dem Schieber und dem tropfenförmigen Körper auf der einen Seite sowie sektionsweise, zwischen rückwärtigen Flächenabschnitten des Ringschiebers 3 und benachbarten Wandabschnitten der mehreckig bzw. viereckig auslaufend ausgebildeten Erweiterung 5.

Wie insbesonder aus Fig. 3 ersichtlich ist, kann der Ringschieber 3 über mehrere, hier beispielsweise 4 gleichförmig über dem Umfang der Ummantelung 7 des Staudruckluftkanals 4 verteilt angeordnete Verstellorgane 11 betätigt werden. Bei diesen Verstellorganen kann es sich z.B. um pneumatische oder hydraulisch betätigte Verstellzylinder handeln. Mit den genannten Verstellorganen 11 zusammenwirkende Zug-Druckstangen 11' (Fig.3) können dabei unter örtlicher Abdichtung durch Öffnungen in der Erweiterung hindurchgeführt und mit dem Ringschieber 3 verbunden sein. Die Verstellbewegung des Ringschiebers 3 könnte im übrigen beispielsweise aber auch durch motorisch angetriebe Kugelrollspindeln erfolgen, die über entsprechend zugeordnete Zug-Druckstangen oder dergleichen Verstellglieder an den Ringschieber 3 angreifen. Dabei könnte also die Verstellkraft für den Ringschieber 3 in Bezug auf den Gesamtumfang der äußeren zylindrischen Kanalummantelung 7 von einer Stelle aus motorisch mittels einer biegsamen Welle und darin zwischengeschalteter Verstellgetriebe auf die betreffenden Kugelrollspindeln übertragen werden, wobei die betreffenden Verstellgetriebe darin drehbar gelagerte und angetriebene Muttern zum Antrieb der Kugelrollspindel aufweisen.

Gemäß Fig. 1 kann ferner die Einrichtung zum wahlweisen Absperren oder freilegen der Luftzuströmfläche Z und des Staudruckluftkanals 4 in Kombination mit einem darauf abgestimmt axial verfahrbaren, axial sowie symmetrisch dem Basistriebwerk nachgeschalteten weiteren tropfen- oder pilzförmigen Schieber 12 vorgesehen sein; der Schieber 12 soll bei ausschließlichem Staustrahlbetrieb und dabei abgesperrter Zuströmfläche Z des Basistriebwerks und freigelegtem Staudruckluftkanal 4 eine ringförmige Düsenaustrittsöffnung 13 des Basistriebwerks gegenüber der dabei stromab dieses Schiebers 12 aus dem Staudruckluftkanal 4 zusammenfließenden Stauluftströmung absperren. In Fig. 1 bildet also die gestrichelt angegebene, am weitesten rechts liegende Kontur des Schiebers 12 die Absperrstellung der Düsenaustrittsöffnung 13 aus, während die in Fig. 1 am weitesten links eingefahrene durch ausgezogene Linienkontur wiedergegebene Stellung des Schiebers 12 die volle Freigabestellung der Düsenaustrittsöffnung 13 repräsentiert.

Z.B. beim Umschalten des Triebwerks vom Turbinenstrahltriebwerksbetrieb auf den Staustrahlbetrieb, wird also der tropfenförmige Körper 1 unter zunehmender Verringerung der Zuströmfläche Z zunehmend gegen die vordere Stirnfläche bzw. Einlauflippe des Strömungsteilers 2 verfahren, während gleichzeitig der Ringschieber 3 zunehmend axial entgegengerichtet der Verstellbewegung des Körpers 1 axial ausgefahren wird, um den Staudruckluftkanal zunehmend freizulegen. Dabei kommt es in der angegebenen Zone T zu einer die Luftzufuhr absperrenden, gegenseitigen Flächenüberfahrung zwischen dem Ringschieber 3 auf der einen Seite und der äußeren Umfangsfläche des tropfenförmigen Körpers 1. Im Wege der zuvor erwähnten Erweiterung 5 der äußeren Kanalummantelung 7 des Triebwerks ist es also möglich, in dieser zuvor beschriebenen gegenseitigen Luftversperrphase den Ringschieber 3 entlang seiner Außenfläche örtlich derart mit zugeführter Luft zu versorgen, daß sowohl noch das Basistriebwerk wie aber auch schon der Staudruckluftkanal in dieser Phase mit den entsprechend geforderten Lufmengen versorgt werden können.

Wie schon eingangs erwähnt, enthält das Turbobasistriebwerk einen Axialverdichter 10, und zwar einen mehrstufigen Axialverdichter. Dem genannten Axialverdichter 10 ist eine koaxial zur Triebwerksachse angeordnete Ringbrennkammer 14 nachgeschaltet, aus der das erzeugte Verbrennungsgas einer einstufigen Axialturbine 15 zugeführt wird. Das Laufrad 16 der Axialturbine 15 treibt den Axialverdichter 10 über ein trommenlartiges Hohlwellensystem an.

Dem Axialverdichter sind hohle Stützschaufeln 17 vorgeschaltet, durch eine derselben eine Antriebswelle 18 geführt ist. Um den tropfenförmigen Körper 1 axial zu verstellen, überträgt die genannte Antriebswelle 18 die Antriebsleistung über ein Kegelradgetriebe 19 auf eine Kugelrollspindel 20, auf der die Mutter 22 sitzt, die die Drehbewegung der Kugelrollspindel in eine axiale Verstellbewegung des tropfenförmigen Körpers 1 umsetzt. Mit 23 ist in Fig. 1 übrigens eine feste innere Sektion des örtlichen Ansaugkanals 9 bezeichnet. Diese innere Sektion 23 setzt sich flächenwandbündig hinsichtlich der Flächenkontur 8 des tropfenförmigen Körpers 1 fort, wenn dieser sich in der axial voll ausgefahrenen Stellung befindet.

Der in Fig. 1 dargestellte tropfenförmige Körper 1 wie aber auch beispielsweise der Ringschieber 3 können aus einem hochtemperaturbeständigen Werkstoff gefertigt sein; bei diesem Werkstoff kann es sich vorzugsweise gemäß der Erfindung um einen keramischen Glasfaserverbundwerkstoff handeln.

Mehr oder weniger nach temperaturbeständiger Werkstoffauswahl kann der tropfenförmiger Körper 1 wie aber auch der Ringschieber 3 gekühlt werden, und zwar jeweils in der für den Staustrahlbetrieb maßgeblichen Endstellung, in der also der tropfenförmige Körper 1 am weitesten möglich axial eingefahren ist, während der Ringschieber am weitesten möglich axial ausgefahren ist. Dabei kann z.B. der tropfenförmige Körper 1 mittels am Triebwerkseinlauf entnommener Luft geeigneten Druckes gekühlt werden, unter der Voraussetzung, daß die erforderliche Kühltemperatur dieser Entnahmeluft beispielsweise im Wege eines Wärmetauschprozesses der Entnahmeluft mit dem mitgeführten Brennstoff, z.B. Wasserstoff, gewonnen wird. Die auf diese Weise heruntergekühlte Kühlluft könnte beispielsweise über die hohlen Stützschaufeln 17, bzw. über eine oder mehrere dieser Schaufeln, dem tropfenförmigen Körper 1 zentral zugeführt werden und von dort gemäß Pfeilen F gegen die Oberfläche dieses Körpers 1 abgeblasen werden. Sinngemäß könnte auch der Schieber 12 einer derartigen oder ähnlichen Kühlung unterworfen werden.

Auch die zuvor besprochene Art der Absperrmittel- bzw. Schieberkühlung ist Gegenstand der vorliegenden Erfindung.

Gemäß der Erfindung könnte auch der stromabwärtige pilz- oder tropfenförmige Körper bzw. Schieber 12 im Sinne der zum tropfenförmigen Körper 1 angegebenen Art gekühlt werden.

Ferner sei vermerkt, daß die beiden Körper bzw. Schieber 1 bzw. 12 stets in Umfangsrichtung verdrehgesichert angeordnet sind.

## Patentansprüche

1. Turbinen-Staustrahltriebwerk mit einem das Turbo-Basistriebwerk ringförmig ummantelnden Staudruckluftkanal, der bei abgeschaltetem Staustrahlbetrieb unter gleichzeitiger Freigabe von Ansaugluft in das Basistriebwerk gegenüber der Zufuhr von Staudruckluft absperrt ist, dadurch gekennzeichnet, daß
   - eine ansaugseitige Luftzuströmfläche (Z) des Basistriebwerks durch Axialverstellung eines tropfenförmigen Körpers (1) gegenüber einem Strömungsteiler (2) freigegeben oder abgesperrt ist;
   - ein diesem Körper (1) stets entgegengerichtet axial verstellbarer Ringschieber (3) vorgesehen ist, der den Staudruckluftkanal (4) bei freigegebener Zuströmfläche (Z) des Basistriebwerks abgesperrt und bei abgesperrter Zuströmfläche (Z) freigibt;
   - der Staudruckluftkanal (4) in Höhe einer durch örtliche Gegenflächenüberfahrung besagten Körpers (1) und Ringschiebers (3) hervorgerufenen Absperrzone in stromaufwärtiger Richtung mehreckig erweitert ist.

2. Triebwerk nach Anspruch 1, dadurch gekennzeichnet, daß der Ringschieber (3) einen in stromaufwärtiger Richtung kegelförmig erweitert profilierter Ring ist, der in der Absperrstellung - zwischen dem Strömungsteiler (2) und angrenzenden Gegenflächen des Staudruckluftkanals (4) und dessen Erweiterung (5) - einen abgeschrägten Führungsabschnitt für die Ansaugluft ausbildet.

3. Triebwerk nach Anspruch 1 oder 2, dadurch gekennzeichnet, daß die Erweiterung (5) teilweise kegelflächenartig ausgebildet und dabei auf die kegelige Form des Ringschiebers (3) abgestimmt gestaltet ist.

4. Triebwerk nach einem oder mehreren der Ansprüche 1 bis 3, dadurch gekennzeichnet, daß der Zuströmquerschnitt für die Ansaugluft in das Basistriebwerk zwischen einem äußeren Umfangswandabschnitt des tropfenförmigen Körpers (1) und einer Lippenstirnkante des Strömungsteilers (2) einerseits und Wandteilen der äußeren Kanalwand (7) ausgebildet ist.

5. Triebwerk nach einem oder mehreren der Ansprüche 1 bis 4, dadurch gekennzeichnet, daß der tropfenförmige Körper (1) als ein koaxial zur Triebwerksachse rotationssymmetrischer, in Richtung der Luftströmung divergent/konvergenter Zentralkörper ausgebildet ist.

6. Triebwerk nach einem oder mehreren der Ansprüche 1 bis 5, dadurch gekennzeichnet, daß der gesamte Zuströmquerschnitt für Staudruckluft in den Staudruckluftkanal (4) bei vollständig axial ausgefahrenem Ringschieber (3) ringflächenartig, zwischen letzterem und dem tropfenförmigen Körper (1) auf der einen Seite sowie sektionsweise, zwischen rückwärtigen Flächenabschnitten des Ringschiebers (3) und benachbarten Wandabschnitten der mehreckigen Erweiterung (5) auf der anderen Seite ausgebildet ist.

7. Triebwerk nach einem oder mehreren der Ansprüche 1 bis 6, dadurch gekennzeichnet, daß der Staudruckluftkanal (4) zwischen einer das Basistriebwerk ummantelnden Innenwand (6) und einer äußeren zylindrischen Umfangswand (7) ausgebildet ist.

8. Triebwerk nach Anspruch 7, dadurch gekennzeichnet, daß die Erweiterung (5), von der äußeren zylindrischen Umfangswand (7) ausgehend, stromaufwärtig viereckig ausläuft.

9. Triebwerk nach Anspruch 4 oder 5, dadurch gekennzeichnet, daß bei freigelegter ringförmiger Zuströmfläche (Z) und abgesperrtem Staudruckluftkanal (4) eine konvergente Umfangswandsektion (8) des tropfenförmigen Körpers (1) und die abgeschrägte Führungssektion des Ringschiebers (3) nebst Sektionen des Strömungsteilers (2) Bestandteile eines ringförmigen Luftansaugkanal (9) des Verdichters (10) des Basistriebwerks sind.

10. Triebwerk nach einem oder mehreren der Ansprüche 1 bis 9, dadurch gekennzeichnet, daß der Ringschieber (3) über mehrere, vorzugsweise vier gleichförmig am äußeren Umfang der Kanalwand (7) des Staudruckluftkanals (4) angeordnete Verstellorgange (11) betätigt wird, deren Zug-Druckstangen, unter örtlicher Abdichtung, durch Öffnungen in der Erweiterung (5) hindurchgeführt und mit dem Ringschieber (3) verbunden sind.

11. Triebwerk nach einem oder mehreren der Ansprüche 1 bis 10, dadurch gekennzeichnet, daß die Einrichtung zum wahlweisen Absperren oder Freilegen der Luftzuströmfläche (Z) und des Staudruckluftkanals (4) in Kombination mit einem darauf abgestimmt axial verfahrbaren, axialsymmetrisch dem Basistriebwerk nachgeschalteten weiteren tropfen- oder pilzförmigen Schieber (12) vorgesehen ist, der bei ausschließlichem Staustrahlbetrieb und dabei abgesperrter Zuströmfläche (Z) des Basistriebwerks und freigelegtem Staudruckluftkanal (4) eine ringförmige Düsenaustrittsöffnung (13) des Basistriebwerks gegenüber der dabei stromab dieses Schiebers (12) aus dem Staudruckluftkanal (4) zusammenfließenden Stauluftströmung absperrt.

12. Triebwerk nach einem oder mehreren der Ansprüche 1 bis 11, dadurch gekennzeichnet, daß die pilz- oder tropfenförmig ausgebildeten Körper (1,13) bzw. Schieber und/oder der Ringschieber (3) aus einem temperaturbeständigen Werkstoff, insbesondere aus einem durch Glasfasern verstärkten, keramischen Verbundwerkstoff gefertigt sind.

**Claims**

1. Turbo ramjet engine having a ram pressure air duct encircling the turbo base engine, which duct is shut off with respect to the supply of ram pressure air when the ramjet operation is switched off and the intake air is simultaneously released into the base engine, characterised in that
 - an intake-side air supply area (Z) of the base engine is released or blocked by axial adjustment of a drop-shaped body (1) with respect to a flow divider (2);
 - there is provided a cylindrical slider (3) axially adjustable always in an opposite direction to this body (1) which blocks the ram pressure air duct (4) when the flow area (Z) of the base engine is released and releases it when the flow area (Z) is blocked;
 - the ram pressure air duct (4) is widened polygonally in the upstream direction on a level with a blocking zone brought about by local overlapping of opposing surfaces of said body (1) and cylindrical slider (3).

2. Engine according to claim 1, characterised in that the cylindrical slider (3) is a profiled ring conically widened in the upstream direction which, in the blocking position - between the flow divider (2) and adjacent opposing surfaces of the ram pressure air duct (4) and its widened portion (5) - forms a sloping guide portion for the intake air.

3. Engine according to claim 1 or 2, characterised in that the widened portion (5) is of partially conically shaped construction and is designed to match the conical shape of the cylindrical slider (3).

4. Engine according to one or more of claims 1 to 3, characterised in that the flow cross-section for the intake air into the base engine is formed between an outer peripheral wall section of the droplike body (1) and a lip front edge of the flow divider (2) on one side and wall portions of the outer duct wall (7).

5. Engine according to one or more of claims 1 to 4, characterised in that the drop-like body (1) is formed as a central body rotationally symmetrical coaxially to the engine axis and divergent-convergent in the direction of the air flow.

6. Engine according to one or more of claims 1 to 5, characterised in that the entire flow cross-section for ram pressure air into the ram pressure air duct (4) when the cylindrical slider (3) is completely extended axially is formed in an annular manner between the latter and the drop-shaped body (1) on one side, and in sections, between rear surface portions of the cylindrical slider (3) and adjacent wall sections of the polygonally widened portion (5) on the other side.

7. Engine according to one or more of claims 1 to 6, characterised in that the ram pressure air duct (4) is formed between an inner wall (6) enclosing the base engine, and an outer cylindrical peripheral wall (7).

8. Engine according to claim 7, characterised in that the widened portion (5) extending from the outer cylindrical peripheral wall (7) runs upstream at four corners.

9. Engine according to claim 4 or 5, characterised in that when the annular flow area (Z) is released and the ram pressure air duct (4) is blocked a convergent peripheral wall section (8) of the drop-shaped body (1) and the sloping guide section of the cylindrical slider (3) along with sections of the flow divider (2) are components of an annular air intake duct (9) of the compressor (10) of the base engine.

10. Engine according to one or more of claims 1 to 9, characterised in that the cylindrical slider (3) is actuated by means of several, preferably four, adjustment elements (11) arranged uniformly on the outer periphery of the duct wall (7) of the ram pressure air duct (4), the tension-compression rods of which, with local sealing, are guided through apertures in the widened portion (5) and are connected to the cylindrical slider (3).

11. Engine according to one of more of claims 1 to 10, characterised in that the device for the optional blocking or release of the air flow area (Z) and the ram pressure air duct (4) is provided in combination with a further drop-shaped or mushroom-shaped slider (12) correspondingly axially movable and connected on the output side axially symmetrically to the base engine and, during exclusive ramjet operation and hence a blocked flow area (Z) of the base engine and a released ram pressure air duct (4), this slider blocks an annular nozzle outlet aperture (13) of the base engine with respect to the ram air flow flowing together downstream of this slider (12) from the ram pressure air duct (4).

12. Engine according to one or more of claims 1 to 11, characterised in that the mushroom-shaped or drop-shaped bodies (1, 13) or sliders and/or the cylindrical slider (3) are made from a temperature-resistant material, in particular from a ceramic composite material reinforced by glass fibres.

## Revendications

1) Turbo-statoréacteur comportant un turbo-réacteur de base entouré de manière annulaire par un canal d'air dynamique qui, par coupure du statoréacteur avec libération simultanée de l'air aspiré destiné au moteur de base ferme l'alimentation en air dynamique, caractérisé en ce que

- du côté de l'aspiration du moteur de base, une section de passage d'air (Z) peut être libérée ou fermée par la commande axiale d'un organe (1) en forme de goutte par rapport à un répartiteur de flux (2),

- un tiroir annulaire (3) commandé axialement toujours en opposition par rapport à l'organe (1) ferme le canal d'air dynamique (4) lorsque la section de passage d'air (Z) est libérée pour le moteur de base et inversement libère le canal lorsque la section de passage d'air (Z) est fermée,

- le canal d'air dynamique (4) est élargi de manière polygonale vers l'amont à la hauteur de la zone de fermeture réalisée par le chevauchement local de l'organe (1) et du tiroir annulaire (3).

2) Turbo-statoréacteur selon la revendication 1, caractérisé en ce que le tiroir annulaire (3) est un anneau profilé s'élargissant de manière conique vers l'amont et qui en position de fermeture (entre le répartiteur de flux (2) et la surface antagoniste adjacente du canal d'air dynamique (4) et de son élargissement (5)) forme un segment de guidage incliné pour l'air aspiré.

3) Turbo-statoréacteur selon les revendications 1 ou 2, caractérisé en ce que l'expansion (5) est partiellement en forme de surface conique et cette forme conique concorde à celle du tiroir annulaire (3).

4) Turbo-statoréacteur selon l'une ou plusieurs des revendications 1 à 3, caractérisé en ce que la section de passage d'air aspiré pour le moteur de base est réalisée entre un segment de paroi périphérique extérieure de l'organe (1) en forme de goutte et une arête frontale de lèvre du répartiteur de flux (2) ainsi qu'entre les parties de paroi de la paroi de canal extérieure (7).

5) Turbo-statoréacteur selon l'une ou plusieurs des revendications 1 à 4, caractérisé en ce que l'organe 1 en forme de goutte est un organe central divergent convergent dans le sens du flux d'air, présentant une symétrie de rotation, en étant monté coaxialement sur l'axe du moteur.

6) Turbo-statoréacteur selon l'une ou plusieurs des revendications 1 à 5, caractérisé en ce que l'ensemble de la section de passage pour l'air dynamique dans le canal d'air dynamique (4) lorsque le tiroir annulaire (3) est complètement sorti dans la direction axiale est, d'un côté, une surface annulaire comprise entre le tiroir et l'organe en forme de goutte (1) et, de l'autre côté, une section, entre les segments de surface arrière du tiroir annulaire (3) et les segments de paroi voisine de l'extension polygonale (5).

7) Turbo-statoréacteur selon l'une ou plusieurs des revendications 1 à 6, caractérisé en ce que le canal d'air dynamique (4) est réalisé entre une paroi intérieure (6) entourant le moteur de base et un paroi périphérique cylindrique extérieure (7).

8) Turbo-statoréacteur selon la revendication 7, caractérisé en ce que l'extension (5) se termine en partant de la paroi périphérique cylindrique extérieure (7), vers l'amont par une forme carrée.

9) Turbo-statoréacteur selon la revendication 4 ou 5, caractérisé en ce que la section de passage (Z) annulaire étant libérée et le canal d'air dynamique (4) couplé, on a une section de paroi périphérique convergente (8) pour l'organe en forme de goutte (1) et la section de guidage inclinée du tiroir annulaire (3) y compris les sections de répartiteur de flux (2) qui font partie d'un canal d'aspiration d'air (9) annulaire du compresseur (10) moteur de base.

10) Turbo-statoréacteur selon l'une ou plusieurs des revendications 1 à 9, caractérisé en ce que le tiroir annulaire (3) est actionné par plusieurs organes de commande (11) de préférence quatre, répartis régulièrement à la périphérie extérieure de la paroi (7) du canal d'air dynamique (4), organe de commande dont les tiges de traction et de poussée traversent à travers des moyens d'étanchéité locaux, les ouvertures de l'extension (5) et sont reliés au tiroir annulaire (3).

11) Turbo-statoréacteur selon une ou plusieurs des revendications 1 à 10, caractérisé en ce que les moyens pour fermer ou libérer sélectivement la section de passage d'air (Z) et le canal d'air dynamique (4) est prévu en combinaison avec un autre tiroir (12) en forme de goutte ou de champignon, en aval du moteur de base, à symétrie axiale, mobile axialement en combinaison avec les moyens ci-dessus, ce tiroir fermant un orifice annulaire de sortie (13) de tuyère du moteur de base par rapport au flux d'air dynamique du canal d'air dynamique (4) qui arrive en aval de ce tiroir (12), lorsqu'il n'y a que le mode de fonctionnement en statoréacteur et que la section de passage (Z) du moteur de base est fermée, le canal d'air dynamique étant libéré.

12) Turbo-statoréacteur selon une ou plusieurs des revendications 1 à 11, caractérisé en ce que les organes (1, 13) en forme de champignon ou de goutte ou les tiroirs et tiroir annulaire (3) sont réalisés en un matériau réfractaire, notamment en un matériau céramique composite renforcé par des fibres de verre.

FIG. 1

**FIG. 2**

**FIG.3**

STRÖMUNGS-RICHTUNG